# FASCICULE DE BREVET EUROPEEN

(11) **EP 3 707 503 B1**
(45) Date de publication et mention de la délivrance du brevet: **04.12.2024**
(21) Numéro de dépôt: 18786769.2
(22) Date de dépôt: 15.10.2018
(51) Int. Cl.: G01N 29/06, G01N 29/44, G01N 29/04, G01M 11/08, G01N 29/52, G01N 29/46, G01N 29/24, G01N 29/14, G01M 5/00

(54) **CONTRÔLE DE SANTE D'UNE STRUCTURE INDUSTRIELLE**
ÜBERWACHUNG DER STRUKTURELLEN GESUNDHEIT FÜR EINE INDUSTRIESTRUKTUR
STRUCTURAL HEALTH MONITORING FOR AN INDUSTRIAL STRUCTURE

(30) Priorité: 08.11.2017 FR 1760460
(43) Date de publication de la demande: 16.09.2020
(73) Titulaire: Commissariat à l'Energie Atomique et aux Energies Alternatives, 75015 Paris (FR)
(72) Inventeur: CHAPUIS, Bastien, 78220 Viroflay (FR); DRUET, Tom, 75015 Paris (FR)
(74) Mandataire: Atout PI Laplace
(86) Numéro de dépôt international: PCT/EP2018/078058
(87) Numéro de publication internationale: WO 2019/091705

(56) Documents cités:
- FR-A1- 3 060 743
- US-A1- 2009 178 483
- TANTER MICKAËL ET AL: "Time reversal and the inverse filter", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 108, no. 1, 1 July 2000 (2000-07-01), pages 223 - 234, XP012001786, ISSN: 0001-4966, DOI: 10.1121/1.429459
- GALLOT THOMAS ET AL: "A passive inverse filter for Green's function retri", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 131, no. 1, 1 January 2012 (2012-01-01), pages EL21 - EL27, XP012159890, ISSN: 0001-4966, [retrieved on 20111213], DOI: 10.1121/1.3665397

## Description

### Domaine de l'invention

L'invention concerne le domaine de la métrologie en général, et en particulier celui du contrôle de santé de structures industrielles (en anglais « *Structural Health Monitoring* », acronyme SHM).

### Etat de la Technique

Le contrôle de l'intégrité des structures (ouvrage d'art, ailes d'avion ou *pipeline* par exemple) au cours de leur vie se fait généralement lors d'opérations de maintenance, avec inspection et intervention humaine. Un problème technique concret consiste par exemple à détecter et dimensionner une zone corrodée sur un fuselage d'avion.

Pour ces contrôles d'intégrité, on utilise généralement des méthodes de contrôle dit non-destructif (CND), selon des méthodes dites « classiques » (par ultrasons, par méthodes électromagnétiques, etc.). Depuis quelques années existent des développements de recherche visant à intégrer des capteurs dans la structure en des points-clefs des structures, ceci afin d'automatiser les mesures (par exemple à intervalles réguliers, ces intervalles étant généralement rapprochés dans le temps) et de pouvoir accéder à des informations sur l'état de santé de certaines zones inaccessibles, sans démontage ni interruption du fonctionnement de la structure. En général, ces développements visent à espacer les intervalles de maintenance, et donc économiser de l'argent.

En particulier, certaines recherches prévoient l'utilisation d'ondes ultrasonores guidées (OG) émises et détectées par des transducteurs piézoélectriques (par exemple de type PZT) intégrés dans la structure. Ces ondes guidées se propagent sur une grande distance (quelques dizaines de centimètres à quelques centaines de mètres), si bien qu'un nombre limité de transducteurs permet de contrôler une grande zone. En pratique, un réseau de transducteurs est déposé sur la structure et les signaux se propageant entre deux transducteurs sont enregistrés (fonctionnement « Pitch-Catch »). Eventuellement, le même transducteur peut être utilisé comme émetteur et comme récepteur (fonctionnement « *Pulse-Echo* »)*.* D'autres technologies peuvent être utilisées pour émettre et/ou détecter les ondes ultrasonores guidées (outre les fibres optiques, des films PolyVinyliDene Fluoride PVDF, des transducteurs électromagnétiques acoustiques (« *ElectroMagnetic Acoustic Transducers* » en anglais, acronyme EMAT) ou encore des capteurs magnétostrictifs par exemple).

Un problème technique général réside dans le fait de trouver un compromis acceptable entre la nature des capteurs à intégrer, le nombre de ces capteurs (coût, encombrement, poids, etc.) et la qualité des informations récupérables par ces capteurs.

Les approches connues présentent des limitations.

La demande de brevet WO2015/082292 décrit une solution de tomographie passive, utilisant une méthode d'analyse par corrélation. L'invention exploite le bruit élastique ambiant (naturellement présent dans la structure). Le bruit naturellement présent dans la structure à étudier est mesuré de manière synchronisée sur l'ensemble des capteurs d'ondes élastiques guidées (dans ce cas des réseaux de Bragg, « *Fiber Bragg Grating* » acronyme FBG, sur fibre optique) disposés sur la structure. La réponse inter-capteurs est identifiée à l'aide d'un algorithme de corrélation. Enfin, une cartographie est calculée, notamment par tomographie (en temps de vol) qui permet la détection, la localisation et la caractérisation des défauts éventuels. Le document décrit l'utilisation de capteurs réseaux de Bragg ainsi que des perfectionnements à base de capteurs piézoélectrique (PZT). L'intrusivité est minimale dans le cas FBG (car les fibres optiques ont des dimensions particulièrement petites). Avec des capteurs PZT, elle reste limitée car le fait de fonctionner en passif (c'est-à-dire sans émission d'ondes élastiques par le système) simplifie l'électronique embarquée, qui ne doit plus fonctionner qu'en réception, sans avoir besoin de circuit d'émission d'ondes élastiques.

Néanmoins, malgré ses avantages, la solution décrite dans WO 2015/082292 présente des limitations. D'abord, cette solution se fonde sur la « corrélation du champ diffus », laquelle suppose une équipartition du bruit ambiant dans la structure. Pour de nombreuses applications industrielles, cette condition n'est pas vérifiée. Par exemple, sur un profil d'aile d'avion, le bruit sur l'intrados diffère du bruit sur l'extrados. De la même manière, un fluide en écoulement dans une canalisation induit naturellement du bruit dans un sens privilégié. Par ailleurs, l'algorithme de tomographie utilisé dans le document WO2015/082292 est une tomographie en temps de vol. Ce type de tomographie permet de caractériser une classe de défauts qui est limitée (i.e. les défauts structurels faiblement diffractants). Les morphologies de défauts qui peuvent être caractérisées sont limitées.

Toujours dans le domaine technique du contrôle de santé des structures industrielles, l'article intitulé *"*Applicability of acoustic noise corrélation for structural health monitoring in nondiffuse field conditions" par Moulin et al. publié en 2009 dans Applied Physics Letters (95, 094104,2009) mentionne le fait qu'en pratique la source de bruit ne respecte pas forcément l'hypothèse d'équipartition, dans une application de contrôle de santé. Malgré son intérêt, l'approche suivie dans ce document présente des limitations. L'auteur ne mentionne pas de techniques alternatives à la méthode d'analyse par corrélation pour extraire des informations sur un défaut structurel. Il ne suggère également pas d'améliorer la convergence vers la fonction de Green.

Il existe un besoin pour des procédés et des systèmes palliant, au moins en partie, les inconvénients précités.

### Résumé de l'invention

Le document décrit des procédés et des systèmes pour l'analyse d'une structure industrielle. Avec une pluralité de capteurs de type réseau de Bragg FBG déployés dans ou sur la structure, des capteurs FBG sont interrogés et une fonction représentative de la réponse impulsionnelle de la structure est déterminée par filtre inverse passif. Par suite, il est déterminé une cartographie de la propagation des ondes élastiques dans la structure selon différentes modalités, et en particulier par tomographie (ondes de volumes ou guidées, par analyse du temps de vol ou selon le signal complet). Des développements décrivent notamment la gestion du nombre et de la position des capteurs, l'usage de sources artificielles de bruit, l'asservissement des capteurs et/ou des sources de bruit au contrôle de santé de la structure, ou encore la visualisation du comportement dynamique de la structure.

Avantageusement, les modes de réalisation de l'invention permettent de fournir des cartographies de structures fines et étendues (type plaques, tubes, réservoirs, rails ou cuves) pour la détection de défaut à l'aide d'un réseau de capteurs d'ondes élastiques guidées et de manière totalement passive (c'est-à-dire sans émettre d'ondes). Les sources de bruit exploitables sont par exemple les turbulences aérodynamiques sur le fuselage d'un avion, un fluide en écoulement dans une canalisation, ou encore des vibrations/frottements sur la structure.

Avantageusement, les modes de réalisation de l'invention par filtre inverse passif FIP permettent d'obtenir des signaux de très bonne qualité, i.e. suffisants pour permettre la mise en oeuvre d'algorithmes d'imagerie par tomographie allant au-delà de la tomographie par temps de vol.

Avantageusement, l'emploi d'un algorithme de type « filtre inverse passif (FIP) » pour identifier la réponse inter-capteurs permet d'homogénéiser la répartition spatiale des sources de bruit et donc de compenser la non-équipartition du bruit. Cela permet d'appliquer la tomographie passive à une bien plus grande classe de configurations industrielles. Il est aussi beaucoup moins lourd en temps de calcul et permet d'envisager de fournir des tomographies (images) de la structure à des cadences importantes.

Avantageusement, les modes de réalisation de l'invention peuvent exploiter des algorithmes de tomographie qui ne se fondent pas seulement sur le temps de vol, mais sur le signal ultrasonore complet. Ces algorithmes de tomographie permettent de caractériser significativement plus de types de défauts structurels.

### Description des figures

Différents aspects et avantages de l'invention vont apparaitre en appui de la description d'un mode préféré d'implémentation de l'invention mais non limitatif, avec référence aux figures ci-dessous :
La figure 1 montre le schéma d'un exemple de dispositif selon l'invention ;
La figure 2 illustre des exemples d'étapes du procédé selon un mode de réalisation de l'invention ;
La figure 3 illustre une méthode d'analyse du contenu spectral complet ;
La figure 4 illustre un mode de réalisation facultatif de l'invention ;
La figure 5 compare les méthodes d'analyse par corrélation et par filtre inverse passif.

### Description détaillée de l'invention

Un « champ élastique diffus » désigne les ondes qui se propagent dans un milieu continu, par exemple en milieu solide. Les milieux liquide et gazeux sont généralement exclus de la portée de l'invention. Le terme « diffus » souligne en effet que se produisent des effets de propagation dans le milieu (e.g. réfraction, diffraction, réverbération, etc.). Les types de milieux considérés sont donc ceux traités dans le domaine technique du *Structural Health Monitoring* dans des environnements industriels (e.g. des profils d'aile d'avion, des poutres, des tubes ou conduites, des plaques d'acier ou de béton, etc.).

Le champ élastique diffus constitue le « bruit ambiant ». Ce bruit peut être d'origine naturelle (turbulences sur un profil d'aile d'avion). Dans certains modes de réalisation, en plus du bruit ambiant, il peut avantageusement être utilisé une ou plusieurs sources de bruit « actives » ou « artificielles »

La fonction de Green (d'un milieu ou d'une structure ou d'un espace) désigne la solution d'une équation différentielle (ou aux dérivées partielles) linéaire à coefficients constants. Elle décrit la propagation des ondes dans cet espace (terminologie de « propagateur » par Feynman). La fonction de Green (ou réponse impulsionnelle) d'une structure donnée ne peut être qu'approchée, i.e. par une ou plusieurs fonctions représentatives de la fonction de Green.

La présente invention travaille dans une bande de fréquence, à bornes finies, qui recouvre l'information utile à extraire de la structure.

Les mesures sont effectuées de manière sensiblement simultanée, i.e. les capteurs physiques délivrent des signaux cad des valeurs analogiques (de voltage) acquises en continu, lesquelles sont numérisées en parallèle. Les instants temporels marquant les débuts des traitements des signaux sur chacun des canaux d'acquisition (i.e. pour chaque capteur) sont les plus proches possible dans le temps.

Contrairement aux procédés utilisant des méthodes par corrélation du bruit inter-capteurs, la présente invention ne requiert pas la présence d'une équipartition en énergie. L'expression « équipartition de l'énergie » désigne le fait que l'énergie totale d'un système à l'équilibre thermodynamique est répartie en parts égales en moyenne entre ses différentes composantes (de quelque nature qu'elles soient i.e. spatiales, temporelles, fréquences).

Les mesures du champ élastique diffus constituent des vecteurs de temps, comprenant de l'information physique utile et du bruit de mesure associés aux capteurs.

Un réseau de Bragg (ou réflecteur de Bragg distribué, expression anglaise *"Fiber Bragg Grating"* acronyme FBG) est un réflecteur de qualité utilisé dans des guides d'onde, par exemple dans des fibres optiques. Il s'agit d'une structure dans laquelle alternent des couches de deux matériaux d'indices de réfraction différents, ce qui provoque une variation périodique de l'indice de réfraction effectif dans le guide. Un réseau de Bragg est une modulation submicronique de l'indice de réfraction du coeur de la fibre : un réseau de quelques millimètres comporte ainsi plusieurs milliers de pas. D'un point de vue fonctionnel, il joue le rôle d'un réflecteur pour une bande spectrale fine centrée à une longueur d'onde caractéristique proportionnelle au pas et à l'indice du coeur de la fibre. Ainsi, toute modification de ces paramètres déplace proportionnellement la longueur d'onde de Bragg. Le suivi de ses déplacements spectraux permet de remonter aux paramètres inducteurs, comme la température ou les déformations subies localement par la fibre optique. Ces réseaux de Bragg sont généralement réalisés par laser au sein du coeur de fibres monomodes. L'inscription de ces réseaux peut notamment s'effectuer par insolation transverse avec une figure d'interférences créée par deux faisceaux laser.

Un type de filtre inverse passif est décrit dans l'article intitulé *"*A passive inverse filter for Green's fonction retrieval' (par Gallot, Catheline, Roux, Campillo) et publié en 2011 dans Journal of the Acoustical Society of America*.* L'analyse par filtre inverse passif a globalement été très peu étudiée.

L'usage de ce type de filtre est connu dans les domaines techniques spécifiques que sont l'analyse d'images médicales et la géophysique, lesquels sont des domaines techniques très éloignés de celui du contrôle de santé des structures de type industriel (SHM).

Concernant le domaine technique du médical, les milieux correspondants ne sont en effet pas comparables. Les objets sont différents (e.g. tissus mous ou à rhéologie spécifique dans le médical versus des milieux solides en contrôle des structures). Les typologies de structure à imager sont très différentes, e.g. durcissement localisé versus des défauts structurels de type fissure ou délaminage). Le type de capteurs y est plus restreint : en général, les seuls capteurs utilisés sont des PZT. Le traitement du signal est également très différent : le domaine médical considère uniquement des ondes de volume, donc pas dispersives (contrairement aux ondes guidées employées généralement en SHM). Ces ondes nécessitent du traitement du signal complexe (prenant en compte la dispersion).

Concernant le domaine technique de la géophysique, ce champ de recherche traite également de milieux solides mais avec des ordres de grandeurs des structures et phénomènes et des problématiques très différents. Le traitement du signal est très différent : les constantes de temps des phénomènes de propagation sont différentes (période des ondes de quelques secondes à dizaines de secondes en géophysique versus quelques millisecondes à quelques centaines de nanosecondes en contrôle de structures. L'instrumentation déployée est donc très différente. Les capteurs en géophysique comprennent des géophones ou des accéléromètres. Du fait de la dimension des objets analysés (kilométriques), les mesures sont effectuées sur sources très éloignées les unes de autres, non connectées entre elles i.e. désynchronisées. Les données sont rapatriées vers un centre de calcul qui se charge de les synchroniser (en général via une trame GPS qui date l'heure de la mesure). En SHM par contre, les capteurs sont généralement reliés en filaire à une même centrale d'acquisition, car au vu de la constante de temps, il faut des mesures bien synchronisées entre elles, ce qui est garanti par la centrale d'acquisition (à la longueur des câbles près, négligeable). Une synchronisation GPS ne serait pas assez précise. Les inhomogénéités de propagation que l'on cherche à imager sont très différentes des défauts rencontrés dans le contrôle de structures industrielles (présence de poches de gaz ou de pétrole, présence de magma dans la chambre magmatique d'un volcan, faille versus délaminage, fissures, trous, décollements, porosités, pertes d'épaisseur, fragilité, etc.).

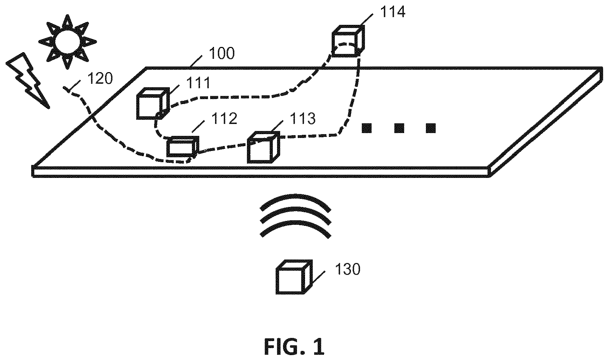

La figure 1 montre le schéma d'un exemple de dispositif selon l'invention.

Dans l'exemple qui est illustré, le dispositif pour analyser la structure 100 comprend une fibre optique et/ou des fils conducteurs 120 interconnectant des capteurs (111, 112, 113, 114, etc.). Ces capteurs sont disposés dans ou sur la structure. De manière facultative, une ou plusieurs sources de bruit 130 peuvent exciter la structure.

L'expression « dans ou sur la [structure] » signifie que les sources de bruit peuvent être intégrées dans la structure (e.g. fondues, moulées, coulées « dans ») et/ou arrangées au-dessus de (e.g. posées, collées, magnétisées ou autrement fixées « sur ») mais encore associées à la structure (i.e. sans qu'il y ait nécessairement contact avec la structure ; par exemple un transducteur aérien peut capter le rayonnement acoustique de la structure ou bien un laser peut mesurer les microdéformations de la surface de la structure).

Dans un mode de réalisation, le système pour l'analyse de la structure 100, comprend une pluralité de capteurs de type réseau de Bragg FBG (111, 112, 113, 114, etc.) ; - les capteurs FBG étant portés par une ou plusieurs fibres optiques 120 couplées à une ou plusieurs sources de lumière; - au moins un photo-détecteur (non représenté) et/ou au moins un analyseur de spectre optique (non représenté) pour analyser la lumière réfléchie après son parcours dans la fibre optique; - des ressources de calcul (non représentées) pour traiter les signaux reçus des capteurs FBG, pour effectuer des analyses par filtre inverse passif et d'imagerie.

Dans un mode de réalisation, la source de lumière est un laser dont on fait varier la longueur d'onde ou une source optique à large bande dont le spectre optique réfléchi est déterminé.

Les effets techniques et les avantages de l'invention associés aux types de capteurs utilisés sont décrits ci-après (notamment les synergies capteurs/filtre inverse passif).

De manière générale, pour tous les types de capteurs FBG, la méthode d'analyse par filtre inverse passif permet des arrangements des capteurs dans l'espace qui sont moins contraints par leurs dispositions vis-à-vis des sources de bruit : le placement est « libre » sur la structure à analyser. A tout le moins, il est possible de placer les capteurs de manière optimale pour obtenir une bonne résolution des algorithmes d'imagerie. Avec les méthodes d'analyse par corrélation, la disposition des capteurs est nécessairement contrainte par la source de bruit, ce qui peut être à l'origine d'artefact - et donc de fausses alarmes - sur les algorithmes d'imagerie. Il est donc avantageux d'utiliser l'analyse par filtre inverse passif dans cette perspective.

Par ailleurs, les méthodes d'analyse par filtre inverse passif permettent de considérer l'emploi d'une plus grande classe de capteurs. Il est par exemple possible d'utiliser des capteurs qui ne soient pas omnidirectionnels (i.e. des capteurs non-omnidirectionnels), ce qui peut présenter des avantages en matière de coût et de simplicité de mise en oeuvre (par exemple s'il existe sur la structure à analyser des contraintes géométriques pour placer les capteurs).

Les avantages ne sont pas seulement opérationnels. Les avantages en matière de traitement du signal sont également significatifs.

Dans un mode de réalisation, le procédé ou le système selon l'invention comprend des capteurs de type réseau de Bragg FBG. Ces capteurs FBG sont portés par au moins une fibre optique. Dans un mode de réalisation, le système selon l'invention ne comprend que des capteurs FBG.

Les capteurs FBG fonctionnent en effet particulièrement bien avec le procédé selon l'invention (synergies entre FBG par analyse par filtre inverse passif).

L'emploi de capteurs FBG avec filtre inverse passif permet notamment une meilleure reconstruction de la fonction représentative de la réponse impulsionnelle, par comparaison avec les méthodes d'analyse par corrélation (pour lesquelles les résidus sont plus faibles). L'utilisation d'une analyse par filtre inverse passif selon l'invention permet de simplifier la disposition de la fibre, les méandres n'étant plus nécessaires pour aligner au mieux les capteurs FBG les uns par rapport aux autres. Par ailleurs, les coûts associés aux capteurs FBG s'amenuisent. Ils tiennent actuellement surtout à l'électronique (interrogateur), le coût marginal d'un capteur FBG supplémentaire restant faible. Il est ainsi possible de disposer d'un grand nombre de capteurs. Les capteurs FBG sont bien adaptés aux environnements extrêmes (depuis des températures cryogénique jusqu'à de très hautes températures, résistance aux radiations, aux agressions chimiques, à la corrosion, etc.). De façon remarquable, les capteurs sont très peu intrusifs et peuvent en particulier être noyés dans des matériaux composites.

Dans un mode de réalisation, le système selon l'invention comprend une combinaison de capteurs FBG et de capteurs PZT. Cette dernière combinaison permet notamment des compromis avantageux en matière de coût et de capture du signal (les capteurs PZT permettent de couvrir à moindre coût la structure à analyser, tandis que les capteurs FBG peuvent être concentrés sur des endroits délicats ou intéressants).

Les capteurs EMAT sont des transducteurs électromagnétiques acoustiques (« *ElectroMagnetic Acoustic Transducers* » en anglais). Dans un mode de réalisation, le système selon l'invention comprend une combinaison de capteurs EMAT et de capteurs FBG, ou bien encore une combinaison de capteurs EMAT, PZT et FBG (permettant des compromis coût/signal avantageux).

L'emploi de capteurs EMAT est particulièrement avantageux pour le contrôle de conduites de fluide (gaz, liquide), en anglais « pipe » ou « pipelines ». Ces capteurs sont peu onéreux. Ils sont généralement peu sensibles ou insensibles au vieillissement (en particulier du collage qui les maintient sur la structure à analyser). Ces capteurs étant sans contact peuvent être bien adaptés à des environnements de travail présentant des températures élevées. Ces capteurs permettent de converger vers la fonction représentative de la réponse impulsionnelle en collectant suffisamment de bruit. Ces capteurs sont particulièrement bien adaptés pour le contrôle de structures métalliques.

Dans un mode de réalisation, le système comprend une pluralité de fibres optiques 120, les fibres optiques étant multiplexées au moyen d'au moins un circulateur optique et/ou un multiplexeur. Chaque capteur ou couple ou paire de capteurs peut être interrogé séparément.

Les avantages liés aux modes de réalisation et à l'emploi de fibres optiques comprennent un faible encombrement, une masse réduite, une grande bande passante, un déport important, une immunité électromagnétique, une bonne résistance aux rayonnements sévères ou ionisants et aux très hautes températures, entre autres.

Selon une variante, une ou plusieurs fibres optiques peuvent être disposées selon des "méandres".

Dans un mode de réalisation, le système comprend en outre une ou plusieurs sources de bruit actives 130 positionnées dans ou sur la structure *de manière à obtenir un champ élastique diffus.*

La présence d'une ou de plusieurs sources de bruit actives ou artificielles 130 constitue une caractéristique additionnelle avantageuse mais entièrement facultative. Les modes de réalisation de l'invention se satisfont en effet de la présence du bruit naturellement présent dans la structure (bruit ambiant). Néanmoins, l'apport externe d'énergie est avantageux en ce qu'il garantit la présence d'une source de bruit possédant les bonnes caractéristiques spectrales au moment de la mesure. Les sources de bruit actives sont maitrisables ou maîtrisée, par définition. La condition d'équipartition du bruit n'est vraisemblablement pas respectée avec des sources de bruit actives : utiliser en combinaison une méthode par filtre inverse passif permet précisément de gérer ce type de configuration (bien plus fréquente que la situation pour laquelle l'énergie est supposée équipartie et pour laquelle les méthodes par corrélation ont été appliquées dans l'état de la technique).

Dans un mode de réalisation, au moins une source de bruit active 130 est un transducteur de puissance (« *power transducer* »)*.* Dans un mode de réalisation un « pot vibrant » peut-être utilisé.

De manière générale, que la source de bruit 130 soit active ou pas (bruit naturel ambiant), un point de mesure (transducteur Bragg) est utilisé généralement à basse fréquence (entre 10 et 1000 kHz), selon des compromis fréquence versus résolution (la résolution de l'imagerie - et donc la capacité à détecter de petits défauts et/ou de manière précoce - augmente quand la fréquence augmente mais la source de bruit passive est généralement plus énergétique à basse fréquence). La distance de propagation dans la structure décroit généralement quand la fréquence augmente. Par exemple, ceci peut influencer la disposition des capteurs (en cercle e.g. de 60 centimètres de diamètre, etc.)

Dans un mode de réalisation, au moins une source de bruit 130 est amovible. Dans un mode de réalisation, les sources de bruit sont inamovibles. Dans un mode de réalisation, des sources de bruit sont amovibles tandis que d'autres sont inamovibles. Dans un mode de réalisation, certaines sources de bruit sont mobiles (e.g. à déplacement manuel causé par l'homme et/ou machine i.e. par des robots et/ou des drones).

Dans un mode de réalisation, la structure à analyser comprend une conduite de fluide. La structure peut être une conduite de gaz ou d'hydrocarbures (« pipeline » en anglais). La structure peut être une conduite de liquide (par exemple une conduite d'eau pour un circuit de refroidissement d'un réacteur nucléaire).

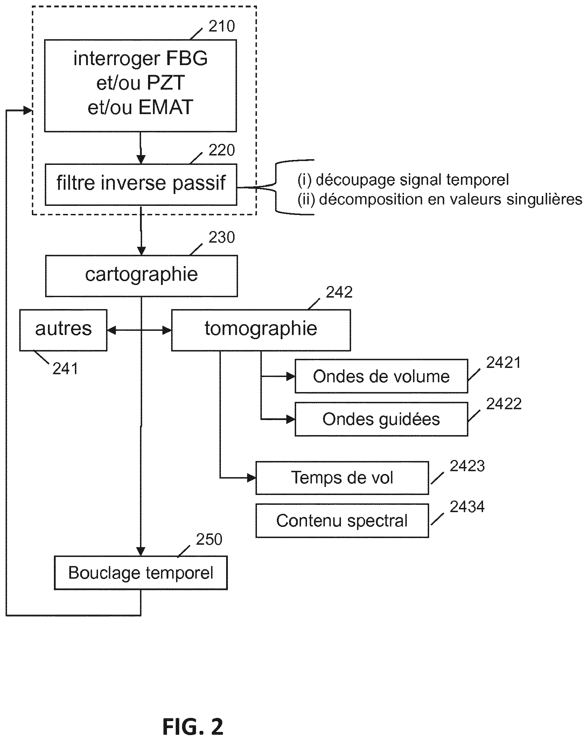

La figure 2 illustre des exemples d'étapes du procédé selon un mode de réalisation de l'invention.

Dans un mode de réalisation, il est divulgué un procédé mis en oeuvre par ordinateur d'analyse d'une structure 100 par filtre inverse passif 220, une pluralité de capteurs de type réseau de Bragg FBG (111, 112, 113, 114, etc.) étant déployés dans ou sur la structure 100 à analyser, les capteurs FBG étant portés par au moins une fibre optique 120; le procédé comprenant les étapes consistant à : - interroger 210 au moins une partie des capteurs FBG;-déterminer par filtre inverse passif 220 une *fonction représentative de la réponse impulsionnelle de la structure* pour des couples de capteurs interrogés.

Le filtre inverse passif détermine les fonctions représentatives à partir de la mesure du bruit (champ élastique diffus).

La réponse impulsionnelle de la structure (la fonction de Green) est unique. Les fonctions représentatives de cette réponse impulsionnelle sont plurielles. Une fonction représentative de la réponse impulsionnelle correspond d'une certaine manière à une vue partielle de cette réponse impulsionnelle (schématiquement à un fenêtrage spectral et/ou une convolution de la fonction de Green avec la réponse d'un capteur).

Le terme « interroger » 210 revêt plusieurs sens, selon le mode de réalisation considéré. Dans le cas d'un mode de réalisation comprenant une fibre optique, l'interrogation d'un ou de plusieurs capteurs peut consister à émettre de la lumière via une extrémité de la fibre et regarder le spectre réfléchi (depuis cette même extrémité) ou transmis (à l'autre bout de la fibre). Dans le cas d'un mode de réalisation comprenant des capteurs piézoélectriques et/ou des EMAT, l'interrogation consiste à recevoir des mesures depuis les capteurs (e.g. des tensions aux bornes des capteurs).

L'interrogation peut être « sensiblement simultanée ». Par le terme "sensiblement", il est fait référence à la vitesse des ondes élastiques et au fait que métrologiquement les interrogations interviennent dans un delta de temps (intervalles de temps rapprochés pour obtenir des mesures significatives du point de vue de la propagation des ondes élastiques dans la structure).

Tout ou partie des capteurs peuvent être interrogés, suivant diverses implémentations. Un sous-ensemble de capteurs peut être interrogé sensiblement simultanément, tandis qu'un autre sous-ensemble peut faire l'objet d'une interrogation retardée (par exemple de façon séquentielle ou de façon parallèle par paires ou bien encore combiner ces modes d'interrogation, par rotation, etc.).

Dans un mode de réalisation, un point de mesure comprend un seul et unique capteur. Dans un mode de réalisation, un point de mesure comprend une pluralité de points de mesure, par exemple plusieurs FBG. Dans un mode de réalisation avantageux, les points de mesure sont disposés en rosette. Cette configuration en rosette est un compromis qui minimise le nombre d'éléments matériels tout en assurant une bonne qualité de la mesure. Un point de mesure peut également comprendre un nombre quelconque de capteurs FBG (par exemple 5 capteurs, 6 capteurs, etc.).

Dans un mode de réalisation, l'étape consistant à déterminer par filtre inverse passif, une fonction représentative de la réponse impulsionnelle de la structure à analyser comprend les étapes consistant à (i) découper les signaux mesurés sur tous les capteurs en une pluralité de sous-vecteurs ou pseudos-sources et (ii) décomposer en valeurs singulières des matrices de propagation monochromatique.

Dans un mode de réalisation, les valeurs singulières qui sont obtenues peuvent être partitionnées dans deux groupes, un premier groupe de valeurs représentatives de l'information physique d'intérêt et un second groupe de valeurs (qui peuvent ultérieurement être mises à zéro). Différentes méthodes permettent de déterminer la valeur de seuillage (en particulier selon les régimes de décroissance des valeurs singulières lorsqu'elles sont ordonnées).

Dans un mode de réalisation, l'étape consistant à déterminer par filtre inverse passif une fonction représentative de la réponse impulsionnelle de la structure à analyser comprend les étapes consistant à a) découper le signal temporel mesuré en une pluralité de sous-vecteurs ou pseudos-sources; b) décomposer en valeurs singulières des matrices de propagation monochromatique déterminées à partir des pseudos-sources dans le domaine fréquentiel; c) obtenir une fonction représentative de la réponse impulsionnelle dans le domaine temporel par transformée de Fourier inverse.

Dans un mode de réalisation, l'étape consistant à déterminer par filtre inverse passif des fonctions représentatives de la réponse impulsionnelle de la structure pour chacun des couples de capteurs interrogés, comprend les étapes consistant à : - recevoir les signaux de mesure du champ élastique diffus depuis les N capteurs physiques FBG de manière sensiblement simultanée, le champ élastique diffus ne respectant pas nécessairement une condition d'équipartition en énergie, lesdites mesures déterminant une pluralité de vecteurs temporels ;-diviser lesdits vecteurs temporels en une pluralité de sous-vecteurs ou pseudos-sources ;- pour chacune des pseudos-sources, effectuer une transformée de Fourier en fréquence w ; - pour chaque fréquence w : 1) déterminer la matrice de propagation monochromatique H(w) reliant les pseudos-sources aux points de mesure ; 2) déterminer une pluralité de valeurs singulières par décomposition en valeurs singulières de chaque matrice H(w) ; 3) ordonner et seuiller lesdites valeurs singulières en un premier groupe de valeurs représentatives de l'information physique d'intérêt et un second groupe de valeurs mises à zéro ; 4) déterminer N^2 fonctions représentatives de la réponse impulsionnelle de la structure (une pour chacun des couples de capteurs physiques réels) ; - déterminer N^2 fonctions temporelles représentatives de la réponse impulsionnelle de la structure en concaténant les transformées de Fourier inverse des N^2 fonctions représentatives de la réponse impulsionnelle calculées dans le domaine fréquentiel.

### Les sous-vecteurs peuvent être appelés des « pseudos-sources »

Dans un mode de réalisation, le procédé comprend en outre une étape consistant à déterminer une ou plusieurs images comprenant une cartographie 230 de la propagation des ondes élastiques dans la structure, les images étant déterminées par une ou plusieurs méthodes d'imagerie sélectionnées parmi une méthode d'imagerie par tomographie 242 ou d'autres méthodes 241 (comprenant une méthode d'imagerie par échographie, une méthode d'imagerie par focalisation en tous point, une méthode d'imagerie par synthèse d'ouverture, une méthode d'imagerie par filtrage spatial, une méthode d'imagerie par retournement temporel ou une méthode d'imagerie à haute résolution).

Une carte ou cartographie obtenue comprend une image de la structure. Cette image est interprétable : par exemple l'étendue d'une zone endommagée est rendue visible. Pour un dommage de corrosion, par exemple, il est possible de connaître l'étendue et l'épaisseur résiduelle. Par suite, la gravité du dommage peut être évaluée, afin le cas échéant de prendre des mesures correctives.

Suivant les algorithmes d'imagerie utilisés, le résultat n'est pas nécessairement une cartographie en vitesse de propagation des ondes élastiques dans la structure. Par exemple, la cartographie 230 peut comprendre une représentation de la structure codée en couleur en fonction de l'amplitude du signal. La représentation n'est pas nécessairement directement reliée à une caractéristique physique de la structure (au contraire par exemple de la vitesse qui est directement reliée à l'épaisseur d'une plaque dans le cas ondes guidées).

Dans un mode de réalisation, le procédé comprend en outre une étape consistant à déterminer par tomographie 242 une ou plusieurs images comprenant une cartographie de propagation des ondes élastiques dans la structure.

La cartographie peut représenter différentes paramètres physiques ou logiques. Par exemple, la cartographie peut être une cartographie en amplitude. Elle peut aussi être une cartographie en vitesse (e.g. montrant le champ de vitesse des ondes i.e. plusieurs vitesses de propagation).

Les vitesses de propagation quant à elles permettent de déduire d'éventuels défauts de structure (e.g. délaminage, fissures, trous, décollements, porosités, pertes d'épaisseur, fragilité, durcissements localisés).

Concernant la tomographie 242, différents modes de réalisation sont décrits ci-après.

Dans un mode de réalisation, une tomographie par rayons droits avec des données d'entrée en temps de vol est généralement robuste et rapide, mais généralement limitée aux défauts peu étendus et peu profonds.

Dans un mode de réalisation, une tomographie par rayons courbés avec des données d'entrée en temps de vol peut prendre en compte les phénomènes de réfraction mais est peu robuste dès lors que le défaut est diffractant.

Dans un mode de réalisation, une tomographie ondulatoire (tomographie en diffraction) avec des données comprenant le champ total monochromatique peut prendre en compte les phénomènes de diffraction mais est généralement limitée aux petits défauts (potentiellement profonds)

Dans un mode de réalisation, une tomographie de type hybride (e.g. propriétaire "HARBUT") avec des données d'entrée en temps de vol et du champ total monochromatique peut prendre à la fois en compte les phénomènes de diffraction et de réfraction mais peut nécessiter un nombre significatif de capteurs si la résolution maximale doit être atteinte.

Plusieurs autres techniques ou méthodes d'imagerie 241 peuvent être utilisées, seules ou en combinaison.

La technique d'imagerie par focalisation en tous points (en anglais « *Total Focusing Method*») consiste à procéder à l'acquisition de la série complète de signaux reliant tous les éléments en émission/réception et à sommer de manière cohérente les signaux en tout point de la zone imagée.

La technique d'imagerie peut se faire par synthèse d'ouverture (en anglais *« Synthetic aperture focusing technique »,* acronyme SAFT). Cette technique permet l'obtention d'une image qui soit facile à interpréter, en incluant l'influence des transducteurs, leur couplage et la suppression du bruit de l'image.

La technique d'imagerie peut se faire par filtrage spatial ou par formation de faisceaux ou par formation de voies (en anglais «*Beamforming*»). Ce type de technique est une technique de traitement du signal utilisée dans les réseaux d'antennes et de capteurs pour l'émission ou la réception directionnelle de signaux, en combinant des éléments d'un réseau d'antennes à commande de phase de telle façon que dans des directions particulières, les signaux interfèrent de façon constructive tandis que dans d'autres direction les interférences soient destructives.

Le retournement temporel est un procédé physique applicable aux ultrasons qui permet à une onde de retourner vers sa source dans le cas d'une propagation non dissipative.

La technique d'imagerie par classification de signaux multiples (en anglais «*MUltiple Signal Classification »* acronyme MUSIC) est une méthode à haute résolution qui s'appuie notamment sur des modèles paramétriques de signal (e.g. propriétés particulières de la matrice de covariance du signal, permettant de séparer l'espace des données en deux sous-espaces, l'espace signal engendré par les sinusoïdes, et l'espace bruit qui est son complémentaire orthogonal). En particulier, la méthode MUSIC s'appuie sur l'espace du bruit.

Dans la technique d'imagerie par « *Excitelet »* (pas de traduction en français), le signal résiduel est corrélé avec les signaux d'une librairie, appelés atomes, correspondants aux signaux résiduels calculés avec un modèle de propagation qui comprend plusieurs modes et prend en compte l'effet dispersif du matériau et l'impédance électromécanique des transducteurs.

La technique d'imagerie par formation de faisceaux de retard et sommation (en anglais «*Delay-and-sum* ») est une variante de filtrage spatial mentionné précédemment. La technique d'imagerie par filtrage spatial Capon (en anglais *«Minimum variance distortionless response* » acronyme MVDR) est également une variante de filtrage spatial.

Des algorithmes de reconstruction pour l'inspection probabiliste des dommages (en anglais « *Reconstruction Algorithm for the Probabilistic Inspection of Damage* », acronyme RAPID) peuvent être utilisés. Ce type de cartographie se fonde sur l'analyse statistique des différences de certaines caractéristiques des signaux mesurés dans un état de référence (sans défaut) et dans l'état courant (potentiellement endommagé).

Dans un mode de réalisation, la tomographie est une tomographie d'ondes ultrasonores de volume 2421.

La propagation libre des ondes élastiques dans un milieu illimité est gouvernée par les seules équations du mouvement. En pratique, le milieu de propagation est souvent limité par une ou plusieurs frontières. Si ces frontières forment une structure de telle sorte que toutes ses dimensions caractéristiques soient très grandes devant la longueur d'onde, les ondes élastiques peuvent être qualifiées d'ondes élastiques de volume (les frontières ne perturbent pas la propagation des ondes dans le volume mais induisent uniquement une réflexion lorsque l'onde s'en approche).

Dans un mode de réalisation, la tomographie est une tomographie d'ondes ultrasonores guidées 2422.

Lorsqu'une dimension caractéristique du milieu de propagation (par exemple l'épaisseur d'une plaque) se rapproche de la longueur d'onde, les ondes élastiques peuvent être qualifiées d'ondes guidées. En effet, les ondes se réfléchissent sur les surfaces ou frontières du milieu (conditions aux limites). La propagation des ondes est désormais gouvernée à la fois par les équations du mouvement et par les conditions aux limites imposées sur les frontières. Les frontières du milieu (de la structure) perturbent la propagation des ondes en les contraignant.

Il existe une très grande diversité d'ondes guidées en fonction de la structure et des propriétés des milieux. Dans le cas des plaques, les ondes guidées qui apparaissent naturellement sont les ondes de Rayleigh-Lamb. En SHM, les ondes de Lamb excitent toute l'épaisseur de la plaque et les ondes de Rayleigh se propagent en surface.

Ces ondes peuvent s'analyser comme une superposition de réflexions successives d'ondes de volume sur les surfaces de la plaque.

L'ordre de grandeur associé aux ondes guidées est variable selon les modes de réalisation (i.e. le type de structure). Dans certaines réalisations expérimentales, des tomographies ont été réalisées à l'aide de capteurs disposés selon des disques d'environ 60 centimètres de diamètre.

Dans un mode de réalisation, la tomographie est effectuée par analyse des temps de vol 2423.

La tomographie par analyse des temps de vol n'est pas toujours optimale. Cette imagerie peut être réalisée par inversion de l'ensemble des temps de vols entre les capteurs FBG, chaque temps de vol pour chaque paire de capteurs étant déduit de la mesure par filtre inverse passif.

Dans un mode de réalisation, le procédé comprend en outre une étape consistant à déterminer la fonction représentative de la réponse impulsionnelle de la structure, effectuée dans un état initial ou de référence de la structure, et comprenant une étape d'imagerie de la structure réalisée par tomographie dans un état courant à partir de ladite première mesure permettant d'identifier certaines particularités géométriques de la structure.

Idéalement, une seule étape d'imagerie (e.g. tomographie) est réalisée. En pratique, il peut être avantageux de calibrer le procédé. A cette fin, une série d'étapes d'imagerie peut être effectuée.

Dans un mode de réalisation, le procédé comprend en outre une seconde mesure effectuée dans un état ultérieur pour les mêmes couples de points de mesure que la première mesure et comprenant en outre une cartographie par tomographie des variations de vitesses de propagation dans la structure entre l'état initial et l'état ultérieur obtenue à partir des différences des signaux mesurés entre les deux états.

Cette étape soustractive vise à éliminer les erreurs sur les positions des capteurs. En effet, les capteurs lors de la mise en place (ou après celle-ci) peuvent se déplacer (e.g. glisser sous l'effet de la pression, suivant les procédés de chauffe ou de polymérisation, etc.) ; dès lors une étape de calibration permet de déterminer la géométrie, inconnue ou mal connue à l'origine.

Dans un mode de réalisation, la température de la structure peut être mesurée et une variation de temps de vol induite par un changement de température peut être compensée. La température peut en effet influer sur les temps de vol (le cas échéant) et il peut dans certaines situations être appréciable de pouvoir corriger ou compenser les effets thermiques. Concrètement, un thermocouple peut être utilisé mais d'autres méthodes de mesure sont possibles comme la mesure via des réseaux de Bragg, par exemple les mêmes que ceux utilisés pour faire la mesure du champ élastique diffus.

Dans un mode de réalisation, la tomographie est effectuée par analyse du contenu spectral (complet) d'un paquet d'onde 2434 (voir ci-après).

Dans un mode de réalisation, un capteur comprenant un capteur de type réseau de Bragg FBG et les capteurs FBG étant portés par au moins une fibre optique.

Dans un mode de réalisation, les étapes de mesure sont réitérées 250 au cours du temps de manière à déterminer le comportement dynamique de la structure.

Des tests expérimentaux ont été menés avec une trentaine de capteurs, les mesures étant réitérées toutes les dix secondes. Selon les modes de réalisation, il est réaliste d'envisager de réitérer les mesures par pas temporel d'une centaine de millisecondes.

Ce mode de réalisation comprenant une boucle temporelle est avantageux en ce qu'il permet de visualiser les déformations *dynamiques* de la structure (par exemple placée sous contraintes, e.g. soumise à une source de chaleur localisée). A l'exception du temps-réel ou des dynamiques ultra-rapides (haute fréquence), certains modes de réalisation de l'invention permettent donc de détecter et d'imager des phénomènes comprenant notamment des déformations et/ou des dilatations de la structure, un ou plusieurs champs de contrainte, comme la diffusion d'un champ de température dans la structure (non exhaustif).

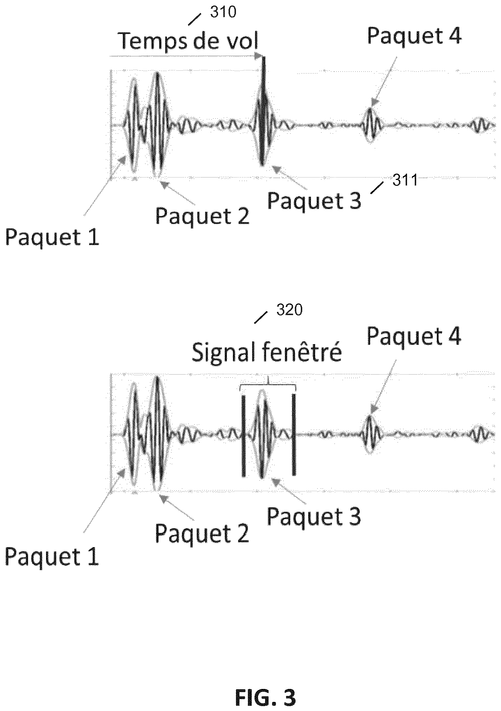

La figure 3 illustre une méthode d'analyse du contenu spectral complet.

Dans un mode de réalisation, la tomographie est effectuée par analyse du contenu spectral (complet) d'un paquet d'onde 2434.

L'invention peut en effet manipuler non seulement le temps de vol mais aussi la phase du signal. La tomographie peut être effectuée par analyse du contenu spectral d'un ou de plusieurs paquets d'onde sélectionnés parmi plusieurs.

Différents modes de propagation associés aux paquets d'onde peuvent être distingués, chaque mode se propageant à une vitesse différente dans la structure. Un mode d'intérêt peut être sélectionné en fenêtrant le signal temporel. La totalité du contenu spectral de ce signal fenêtré peut alors être manipulé par l'invention.

Un signal ultrasonore entre deux capteurs se présente généralement sous la forme illustrée à la figure 3.

Différents paquets d'onde peuvent être identifiés, qui correspondent généralement à des modes différents. Pour la tomographie, un seul paquet est généralement manipulé (par exemple le paquet d'onde numéroté 311, lequel correspond au même mode pour tous les couples de capteurs. Pour de la tomographie en temps de vol 310, l'amplitude maximale de l'enveloppe du paquet peut être déterminée, ce qui fournit en retour le temps de vol.

Pour de la tomographie fondée sur le signal complet, le signal peut être fenêtré autour du paquet, et tout le signal à l'intérieur de cette fenêtre 320 peut être exploité.

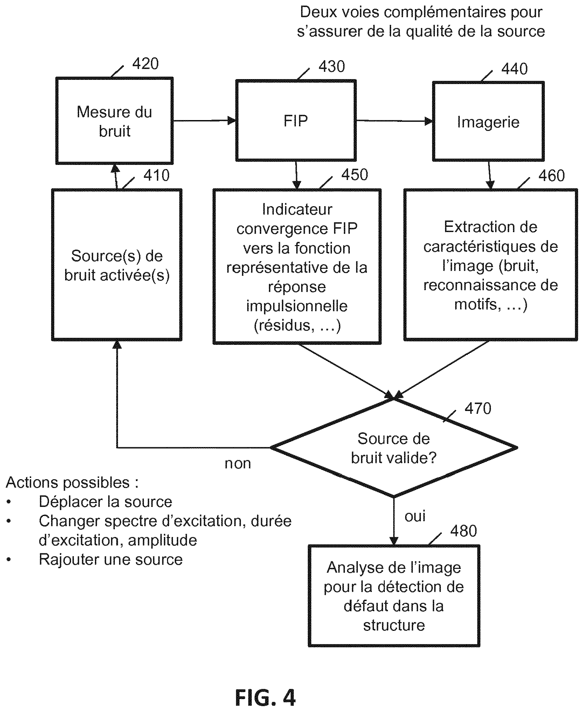

La figure 4 illustre un mode de réalisation facultatif de l'invention.

Dans un mode de réalisation, la position dans l'espace de chaque point de mesure est préalablement mesurée.

La connaissance de la géométrie (positions des capteurs) n'est pas une caractéristique essentielle : elle peut être déduite par calibration, voir infra). Il est cependant avantageux de connaître cette géométrie si cela est possible.

Dans un mode de réalisation, le nombre et/ou les positions des sources de bruit et/ou des capteurs peuvent être ajustés.

Après activation de la source de bruit 410, le bruit est mesuré 420, puis l'analyse par filtre inverse est effectuée 430 et enfin une ou plusieurs images sont déterminées 440, notamment par tomographie.

Deux boucles de rétroaction peuvent être particularisées. Les attributs (nature, nombre, position) des sources actives de bruit 410 peuvent être asservis aux étapes du procédé, en particulier en fonction de la qualité de la convergence du filtre inverse passif vers la fonction représentative de la réponse impulsionnelle 450 et/ou en fonction de la qualité de l'imagerie 460 obtenue après traitement du bruit par le filtre inverse passif. L'étape d'analyse par filtre inverse passif 430 peut être associée à des divers indicateurs 450 quant à la convergence du filtre vers la fonction représentative de la réponse impulsionnelle. L'étape d'imagerie 440 peut être associée à l'extraction de caractéristiques de l'image (e.g. bruit, reconnaissance des motifs). A cette suite, il peut être déterminé si la source de bruit considérée 470 est valide, ou pas. Enfin, à l'étape 480, l'image résultante est analysée pour détecter d'éventuels défauts dans la structure.

Dans la liste des actions qui peuvent résulter des analyses effectuées, que ce soit en réaction face à un résultat ou par pilotage par l'aval (« *feedforward* »), un capteur (ou une source de bruit) peut être changé de position (déplacée). Le spectre d'excitation peut être modifié (e.g. durée d'excitation, amplitude etc.). Il peut être ajouté ou retiré des capteurs (ou une source de bruit).

Dans certains modes de réalisation, les capteurs et/ou des sources de bruit sont mobiles. Par exemple, des systèmes robotiques peuvent réguler le nombre, la nature et/ou la position des capteurs. De micro-déplacements sont possibles dans certains cas.

Dans un mode de réalisation, la disposition des capteurs dans l'espace est indépendante (i.e. « n'est pas fonction de » ou « ne dépend pas essentiellement de») d'au moins une source de bruit active. La disposition de l'imagerie peut notamment dépendre ou être asservie à ou être fonction de l'imagerie.

La méthode d'analyse du champ élastique diffus par filtre inverse passif permet en effet de rehausser le signal i.e. de récupérer et d'exploiter la moindre énergie (éventuellement) présente dans chaque direction d'espace. Par suite, l'arrangement physique des capteurs est moins critique que dans le cas d'une analyse par corrélation. Aux limites et en pratique, les positions des capteurs peuvent ne plus dépendre des sources de bruit (ambiant ou artificiel). En revanche, l'arrangement (topographie/topologie) des capteurs peut être optimisé par rapport aux étapes d'imagerie (cartographie, tomographie).

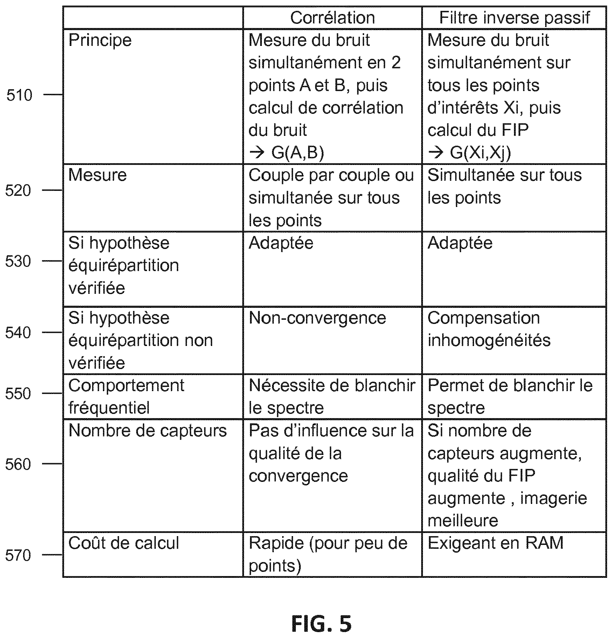

La figure 5 compare certains aspects des méthodes d'analyse par corrélation et par filtre inverse passif dans le contexte de l'invention.

La demande de brevet WO2015/082292 décrivait une méthode d'analyse par corrélation. Ce type d'analyse est moins adapté dans certaines situations que l'analyse par filtre inverse passif.

Concernant leur principe 510 : une méthode d'analyse par corrélation procède au calcul de la corrélation du bruit mesuré simultanément en deux points A et B (fonction représentative de la réponse impulsionnelle G(A,B)) alors qu'une méthode par filtre inverse passif procède à la mesure du bruit simultanément sur tous les points d'intérêts Xi puis calcule le filtre inverse passif qui fournit une fonction représentative de la réponse impulsionnelle G(Xi,Xj) pour chacun des couples de points.

Concernant le processus d'acquisition 520 : une méthode d'analyse par corrélation peut procéder à une mesure simultanée *couple par couple* alors qu'une méthode par filtre inverse passif procède nécessairement à une mesure simultanée sur *tous les* points (adressables). L'analyse effectuée couple par couple peut être avantageuse par exemple s'il n'y a pas de possibilité d'avoir de systèmes multivoies capables de gérer d'importants flux de données et si la source ne varie pas significativement au cours du temps. Les mesures effectuées sur tous les points peuvent être rapides mais éventuellement plus coûteuses.

Si l'hypothèse d'équipartition en énergie est vérifiée 530 : une méthode d'analyse par corrélation est adaptée et une méthode par filtre inverse passif est également adaptée mais les résidus sont généralement moins importants que par corrélation. La fonction de représentative de la réponse impulsionnelle de la structure qui est déterminée par le filtre inverse passif est alors généralement de meilleure qualité, i.e. plus propice à une analyse ultérieure pour la détection de défaut. La qualité de la reconstruction peut s'exprimer en terme de rapport signal sur bruit du signal déterminé (« Signal-to-Noise ») : le signal représente l'information utile tandis que le bruit (ici les « résidus », à ne pas confondre avec le bruit ambiant) représente un niveau de fluctuations qu'on obtiendrait en sortie de calcul du filtre inverse passif même en l'absence de signal significatif. En général, plus le champ élastique diffus est mesuré sur une grande période de temps, meilleure est la convergence du filtre inverse passif vers la fonction représentative de la réponse impulsionnelle. Dit autrement : le rapport signal sur bruit sera plus élevé (les résidus sont plus faibles sur le signal calculé).

Si l'hypothèse d'équipartition en énergie n'est pas vérifiée 540 : une méthode d'analyse par corrélation peut ne pas converger (asymétrie forte de la fonction représentative de la réponse impulsionnelle et résidus significatifs) alors qu'une méthode d'analyse par filtre inverse passif peut compenser les inhomogénéités du flux (c'est-à-dire rehausser l'information dès lors qu'il y a un tout petit peu d'énergie dans les directions d'intérêt). Concernant le comportement fréquentiel 550 : une méthode d'analyse par corrélation nécessite de blanchir le spectre (pour élargir la bande passante de la réponse ou un filtrage a posteriori de la fonction représentative de la réponse impulsionnelle) alors qu'une méthode par filtre inverse passif permet naturellement (i.e. sans étape de traitement supplémentaire) de blanchir le spectre (du signal est récupéré dès lors qu'il y a un tout petit peu d'énergie aux fréquences d'intérêt).

Concernant le nombre de capteurs 560, plus leur nombre augmente meilleurs sont les résultats avec la méthode par filtre inverse passif (et la tomographie est également meilleure). Au contraire, le traitement par corrélation ne tire pas d'avantage de l'augmentation du nombre de capteurs dans la structure pour améliorer la qualité des fonctions représentatives des réponses impulsionnelles obtenues.

Concernant le coût de calcul 570, une méthode par corrélation est généralement rapide pour peu de points mais le coût augmente rapidement lorsque le nombre de points augmente. Une méthode par filtre inverse passif est généralement exigeante en utilisation de ressources mémoire (notamment pour charger en mémoire tous les signaux simultanément en RAM), mais permet de déterminer simultanément toutes les fonctions représentatives des réponses impulsionnelles de la distribution de capteurs considérée.

La présente invention peut s'implémenter à partir d'éléments matériel et/ou logiciel. Elle peut être disponible en tant que produit programme d'ordinateur sur un support lisible par ordinateur. Le support peut être électronique, magnétique, optique ou électromagnétique.

## Revendications

1. Procédé mis en oeuvre par ordinateur pour obtenir des signaux pour analyser l'état d'une structure, le procédé comprenant des étapes consistant à :
- positionner dans ou sur une structure à analyser, une pluralité de capteurs de type réseau de Bragg FBG, les capteurs FBG étant portés par au moins une fibre optique ;
- mesurer un champ élastique diffus se propageant dans la structure, en interrogeant au moins une partie des capteurs FBG, chaque capteur FBG interrogé constituant un point de mesure ; et
- déterminer par filtre inverse passif des fonctions représentatives de la réponse impulsionnelle de la structure pour des couples de capteurs FBG interrogés, chaque fonction représentative de la réponse impulsionnelle de la structure constituant un signal permettant d'analyser l'état de la structure.

2. Procédé selon la revendication 1, l'étape consistant à déterminer par filtre inverse passif, une fonction représentative de la réponse impulsionnelle de la structure à analyser comprenant les étapes consistant à (i) découper les signaux mesurés sur tous les capteurs FBG interrogés en une pluralité de sous-vecteurs ou pseudos-sources et (ii) décomposer en valeurs singulières des matrices de propagation monochromatique.

3. Procédé selon la revendication 1, l'étape consistant à déterminer par filtre inverse passif une fonction représentative de la réponse impulsionnelle de la structure à analyser comprenant les étapes consistant à a) découper le signal temporel mesuré en une pluralité de sous-vecteurs ou pseudos-sources; b) décomposer en valeurs singulières des matrices de propagation monochromatique déterminées à partir des pseudos-sources dans le domaine fréquentiel; c) obtenir la fonction représentative de la réponse impulsionnelle dans le domaine temporel par transformée de Fourier inverse.

4. Procédé selon l'une quelconque des revendications précédentes comprenant de plus une étape consistant à déterminer l'état de la structure à partir d'une analyse des signaux représentatifs chacun d'un état de la structure.

5. Procédé selon la revendication 4, dans lequel d'étape de détermination de l'état de la structure comprend une étape consistant à déterminer par tomographie une ou plusieurs images comprenant une cartographie de propagation des ondes élastiques dans la structure.

6. Procédé selon la revendication 4, dans lequel d'étape de détermination de l'état de la structure comprend une étape consistant à déterminer une ou plusieurs images comprenant une cartographie de la propagation des ondes élastiques dans la structure, les images étant déterminées par une ou plusieurs méthodes d'imagerie sélectionnées parmi une méthode d'imagerie par tomographie, une méthode d'imagerie par échographie, une méthode d'imagerie par focalisation en tous point, une méthode d'imagerie par synthèse d'ouverture, une méthode d'imagerie par filtrage spatial, une méthode d'imagerie par retournement temporel ou une méthode d'imagerie à haute résolution.

7. Procédé selon la revendication 5, la tomographie étant effectuée par analyse du contenu spectral d'un paquet d'onde.

8. Procédé selon l'une quelconque des revendications précédentes, les étapes de mesure étant réitérées au cours du temps de manière à déterminer le comportement dynamique de la structure.

9. Système pour obtenir des signaux pour analyser l'état d'une structure, comprenant :
- une pluralité de capteurs de type réseau de Bragg FBG, positionnés dans ou sur une structure à analyser, les capteurs FBG étant portés par au moins une fibre optique couplée à au moins une source de lumière ;
- au moins un photo-détecteur et/ou au moins un analyseur de spectre optique pour analyser la lumière réfléchie après son parcours dans la fibre optique, et pour mesurer un champ élastique diffus se propageant dans la structure, en interrogeant au moins une partie des capteurs FBG, chaque capteur FBG interrogé constituant un point de mesure ; et
- des ressources de calcul pour déterminer par filtre inverse passif des fonctions représentatives de la réponse impulsionnelle de la structure pour des couples de capteurs FBG interrogés, chaque fonction représentative de la réponse impulsionnelle de la structure constituant un signal permettant d'analyser l'état de la structure.

10. Système selon la revendication précédente, dans lequel une source de lumière est un laser à longueur d'onde variable ou une source optique à large bande.

11. Système selon l'une quelconque des revendications 9 ou 10 comprenant une pluralité de fibres optiques, les fibres optiques étant multiplexées au moyen d'au moins un circulateur optique et/ou un multiplexeur.

12. Système selon l'une quelconque des revendications 9 à 11, comprenant en outre une ou plusieurs sources de bruit actives positionnées dans ou sur la structure de manière à obtenir un champ élastique diffus.

13. Système selon l'une quelconque des revendications 9 à 12, dans lequel les capteurs sont positionnés dans l'espace indépendamment d'au moins une source de bruit active, et/ou sont positionnés pour obtenir une bonne résolution de l'algorithme d'imagerie utilisé.

## Patentansprüche

1. Verfahren, das von einem Computer implementiert wird, um Signale zum Analysieren des Zustands einer Struktur zu erhalten, wobei das Verfahren folgende Schritte umfasst:
- Positionieren einer Vielzahl von Sensoren vom Typ Faser-Bragg-Gitter FBG in oder auf einer zu analysierenden Struktur, wobei die FBG-Sensoren von mindestens einer Lichtleitfaser getragen sind;
- Messen eines diffusen elastischen Felds, das sich in der Struktur ausbreitet, durch Abfragen mindestens eines Teils der FBG-Sensoren, wobei jeder abgefragte FBG-Sensor einen Messpunkt bildet; und
- Bestimmen, durch ein passives Umkehrfilter, von Funktionen, die für die Impulsantwort der Struktur für abgefragte Paare von FBG-Sensoren stehen, wobei jede Funktion, die für die Impulsantwort der Struktur steht, ein Signal bildet, das das Analysieren des Zustands der Struktur ermöglicht.

2. Verfahren nach Anspruch 1, wobei das Bestimmen, durch ein passives Umkehrfilter, einer Funktion, die für die Impulsantwort der zu analysierenden Struktur steht, (i) das Splitten der an allen abgefragten FBG-Sensoren gemessenen Signale in eine Vielzahl von Untervektoren oder Pseudoquellen und (ii) das Zerlegen von monochromatischen Ausbreitungsmatritzen in singuläre Werte umfasst.

3. Verfahren nach Anspruch 1, wobei das Bestimmen, durch ein passives Umkehrfilter, einer Funktion, die für die Impulsantwort der zu analysierenden Struktur steht, a) das Splitten des gemessenen Zeitsignals in eine Vielzahl von Untervektoren oder Pseudoquellen; b) das Zerlegen von monochromatischen Ausbreitungsmatritzen, die anhand der Pseudoquellen in dem Frequenzbereich bestimmt werden, in singuläre Werte; c) das Erhalten der Funktion, die für die Impulsantwort im Zeitbereich steht, durch umgekehrte Fourier-Transformation, umfasst.

4. Verfahren nach einem der vorhergehenden Ansprüche, außerdem umfassend das Bestimmen des Zustands der Struktur anhand einer Analyse der Signale, die jeweils für einen Zustand der Struktur stehen.

5. Verfahren nach Anspruch 4, wobei das Bestimmen des Zustands der Struktur das Bestimmen, durch Tomographie, eines oder mehrerer Bilder, umfassend eine Ausbreitungskartographie der elastischen Wellen in der Struktur, umfasst.

6. Verfahren nach Anspruch 4, wobei das Bestimmen des Zustands der Struktur das Bestimmen eines oder mehrerer Bilder, umfassend eine Kartographie der Ausbreitung der elastischen Wellen in der Struktur umfasst, wobei die Bilder durch ein oder mehrere Bildgebungsverfahren bestimmt werden, die ausgewählt sind aus einem Bildgebungsverfahren durch Tomographie, einem Bildgebungsverfahren durch Echographie, einem Bildgebungsverfahren durch die "Total Focusing Method" an jedem Punkt, einem Bildgebungsverfahren durch die "Synthetic Aperture Focusing Technique", einem Bildgebungsverfahren durch Raumfilterung, einem Bildgebungsverfahren durch Zeitumkehr oder einem Hochauflösungsbildgebungsverfahren.

7. Verfahren nach Anspruch 5, wobei die Tomographie durch Analyse des Spektralgehalts eines Wellenpakets erfolgt.

8. Verfahren nach einem der vorhergehenden Ansprüche, wobei die Messschritte im zeitlichen Verlauf derart wiederholt werden, dass das dynamische Verhalten der Struktur bestimmt wird.

9. System zum Erhalten von Signalen zum Analysieren des Zustands einer Struktur, Folgendes umfassend:
- eine Vielzahl von Sensoren vom Typ Faser-Bragg-Gitter FBG, die in oder auf einer zu analysierenden Struktur positioniert sind, wobei die FBG-Sensoren von mindestens einer Lichtleitfaser getragen sind, die an mindestens eine Lichtquelle gekoppelt ist;
- mindestens einen Fotodetektor und/oder mindestens einen Lichtspektrumanalysator zum Analysieren des nach seinem Durchlaufen der Lichtleitfaser reflektierten Lichts und zum Messen eines diffusen elastischen Felds, das sich in der Struktur ausbreitet, durch Abfragen mindestens eines Teils der FBG-Sensoren, wobei jeder abgefragte FBG-Sensor einen Messpunkt bildet; und
- Rechenressourcen zum Bestimmen, durch ein passives Umkehrfilter, von Funktionen, die für die Impulsantwort der Struktur für abgefragte Paare von FBG-Sensoren stehen, wobei jede Funktion, die für die Impulsantwort der Struktur steht, ein Signal bildet, das das Analysieren des Zustands der Struktur ermöglicht.

10. System nach dem vorhergehenden Anspruch, wobei eine Lichtquelle ein Laser mit variabler Wellenlänge oder eine optische Breitbandquelle ist.

11. System nach einem der Ansprüche 9 oder 10, umfassend eine Vielzahl von Lichtleitfasern, wobei die Lichtleitfasern mittels mindestens eines optischen Zirkulators und/oder eines Multiplexers gemultiplext werden.

12. System nach einem der Ansprüche 9 bis 11, ferner umfassend eine oder mehrere aktive Geräuschquellen, die derart in oder auf der Struktur positioniert sind, dass ein diffuses elastisches Feld erhalten wird.

13. System nach einem der Ansprüche 9 bis 12, wobei die Sensoren unabhängig von mindestens einer aktiven Geräuschquelle in dem Raum positioniert sind und/oder so positioniert sind, dass eine gute Auflösung des verwendeten Bildgebungsalgorithmus erhalten wird.

## Claims

1. A computer-implemented method for obtaining signals to analyse the state of a structure, the method comprising the steps of:
- positioning, in or on a structure to be analysed, a plurality of sensors of fibre Bragg grating FBG-type, the FBG sensors being borne by at least one optical fibre;
- measuring a diffuse elastic field propagating through the structure by interrogating at least some of the FBG sensors, each interrogated FBG sensor being a measurement point; and
- determining, by a passive inverse filter, functions representative of the impulse response of the structure for pairs of interrogated FBG sensors, each function representative of the impulse response of the structure being a signal for analysing the state of the structure.

2. The method according to claim 1, the step of determining, by a passive inverse filter, a function representative of the impulse response of the structure to be analysed comprising the steps of (i) dividing the signals measured on all the interrogated FBG sensors into a plurality of sub-vectors or pseudo-sources and (ii) decomposing monochromatic propagation matrices into singular values.

3. The method according to claim 1, the step of determining, by a passive inverse filter, a function representative of the impulse response of the structure to be analysed comprising the steps of a) dividing the measured time signal into a plurality of sub-vectors or pseudo-sources; b) decomposing monochromatic propagation matrices determined from the pseudo-sources in the frequency domain into singular values; c) obtaining the function representative of the impulse response in the time domain by inverse Fourier transform.

4. The method according to any one of the preceding claims, also comprising a step of determining the state of the structure from an analysis of the signals, each representative of a state of the structure.

5. The method according to claim 4, wherein the step of determining the state of the structure comprises a step of determining, by tomography, one or more images comprising a map of propagation of the elastic waves through the structure.

6. The method according to claim 4, wherein the step of determining the state of the structure comprises a step of determining one or more images comprising a map of the propagation of the elastic waves through the structure, the images being determined by one or more imaging methods selected from a tomography imaging method, an ultrasound imaging method, a total-focusing imaging method, a synthetic aperture focusing imaging method, a spatial-filtering imaging method, a time-reversal imaging method or a high-resolution imaging method.

7. The method according to claim 5, the tomography being performed via analysis of the spectral content of a wave packet.

8. The method according to any one of the preceding claims, the measuring steps being reiterated over time so as to determine the dynamic behaviour of the structure.

9. A system for obtaining signals to analyse the state of a structure, comprising:
- a plurality of sensors of fibre Bragg grating FBG-type, positioned in or on a structure to be analysed, the FBG sensors being borne by at least one optical fibre coupled to at least one light source;
- at least one photodetector and/or at least one optical spectrum analyser for analysing the reflected light after its journey through the optical fibre, and for measuring a diffuse elastic field propagating through the structure by interrogating at least some of the FBG sensors, each interrogated FBG sensor being a measurement point; and
- computational resources for determining, by a passive inverse filter, functions representative of the impulse response of the structure for pairs of interrogated FBG sensors, each function representative of the impulse response of the structure being a signal for analysing the state of the structure.

10. The system according to the preceding claim, wherein a light source is a variable-wavelength laser or a wideband optical source.

11. The system according to any one of claim 9 or 10, comprising a plurality of optical fibres, the optical fibres being multiplexed by means of at least one optical circulator and/or one multiplexer.

12. The system according to any one of claims 9 to 11, further comprising one or more active noise sources positioned in or on the structure so as to obtain a diffuse elastic field.

13. The system according to any one of claims 9 to 12, wherein the sensors are arranged in space independently of at least one active noise source and/or are positioned to obtain a good resolution from the imaging algorithm that is used.
